# EUROPEAN PATENT APPLICATION

(11) **EP 4 344 774 A1**
(43) Date of publication of application: **03.04.2024**
(21) Application number: 22198158.2
(22) Date of filing: 27.09.2022
(51) Int. Cl.: B01J 23/745, B01J 23/89, B01J 23/75, B01J 23/44, B01J 21/04, B01J 21/08, B01J 21/18, B01J 27/20, B01J 35/04, B01J 37/02, B01J 37/08, B01J 37/18, B22F 10/62, C07C 45/38, B29C 64/106, B22F 10/10, H01M 4/04

(54) **THREE-DIMENSIONAL POROUS STRUCTURE AND METHOD FOR PRODUCING IT**

(71) Applicant: VITO NV, 2400 Mol (BE); C2CAT BV, 2165 CK Lisserbroek (NL)
(72) Inventor: MIDDELKOOP, Vesna, 2400 Mol (BE); KUS, Monika, 2400 Mol (BE); DE VOS, Yoran, 2400 Mol (BE); SOTOODEH, Farnaz, 2165 CK Lisserbroek (NL); WOERLEE, Geert Feye, 1382 GS Weesp (NL); HOFLAND, Gerard Willem, 1382 GS Weesp (NL)
(74) Representative: AWA Benelux

(57) **Abstract**

The present invention relates to a method (100) for producing a three-dimensional porous structure, comprising building (101) a three-dimensional porous green body using 3D printing, in a layered fashion from a paste comprising a carrier material comprising an inorganic material, a binder material and a solvent, and drying (102) the three-dimensional porous green body, thereby obtaining the three-dimensional porous structure, wherein drying (102) the three-dimensional porous green body comprises passing a feed of a first supercritical fluid through the pores of the three-dimensional green body, thereby removing the solvent from the three-dimensional green body. Catalytically active metal is deposited on 3D-printed support using supercritical carbon dioxide, for example iron or palladium on alumina or cobalt on silica or graphene. The invention further relates to a three-dimensional porous structure comprising an inorganic material comprising interconnected pores and a catalytically active material deposited on at least part of a surface of the pores in the form of grains having an average grain size of at most 1 µm, as determined by EDX.

## Description

### Technical field

The present invention is related to a method for producing a three-dimensional porous structure, in particular a three-dimensional porous 3D-printed structure, comprising an inorganic material. The present invention is further related to a three-dimensional porous structure, in particular a three-dimensional porous 3D-printed structure, such as a three-dimensional porous structure obtained with methods of the invention.

### Background art

Porous structures can serve many applications, such as applications involving a flow of fluid passing through the structure. One typical application is filtration. Porous structures can be made of a wide range of materials, such as polymers, inorganic materials such as ceramics, and composites, which each show advantages and disadvantages in certain conditions such as temperature, pressure and humidity. In function of the application, the porous structure can be functionalised, for example to be hydrophobic, hydrophilic, oleophobic. A porous structure can also be provided with a particular component on its surfaces, for example a catalyst for catalytic applications.

Three-dimensional (3D) porous structures can be made by means of different technologies. One particular way to make 3D porous structures is in a layered fashion from a paste, for example by stacking a plurality of layers. Different ways exist to make a product in a layered fashion, one of them being 3D-printing.

3D-printing has become a technology of interest for many applications, since it allows to produce specific designs and products, which can be used in a large number of applications, such as filtration, as sorbent, as catalyst, in construction, etc. Different 3D-printing methods are nowadays known, and materials having a wide range of possible compositions and properties can be made. Also the designs can widely vary these days.

A particular 3D-printing technology that produces the 3D-printed article in a layered fashion from a paste, also called a build material paste, comprises extrusion-based processing, such as extrusion-based additive manufacturing, wherein a build material paste is extruded through a nozzle in the form of filaments. The technique is suitable for the fabrication of three-dimensional monolithic porous structures with interconnected pores. The shape, geometry and size of the 3D porous structures can vary largely. The desired arrangement of filaments, to arrive at a given shape, geometry and size, can be obtained by relative movement of the filament with respect to a print surface during filament deposition. Filaments are positioned relative to one another according to a predetermined pattern, thereby providing a porous structure with interconnected pores and desired properties. Typical build material pastes comprise a main compound (carrier material), a binder material and a solvent. The viscosity of the build material paste depends on the composition, wherein in general the build material paste is more viscous when the amount of solvent is reduced. When the 3D-printed structure should be inorganic, such as ceramic, or carbon-based, such as carbonaceous, the carrier material comprises or consists of an inorganic material or compound, such as a ceramic material or a carbon-based compound.

Whereas 3D-printing of polymers and metals is already known for a while, 3D-printing of inorganic materials and carbon-based materials has gained interest more recently. Since inorganic materials, in particular ceramic materials and carbon-based materials can typically withstand higher temperatures than polymers, they can serve particular uses, such as filtration, sorption or catalytic processes which require preparation steps and process steps carried out at temperatures which often are not supported by polymeric structures.

3D-printed articles can be porous, i.e. they can comprise interconnected pores. In the course of the 3D-printing process voids can be foreseen in the internal structure of the article. Similarly, in order to provide access to the internal structure, voids can be foreseen along one or more of the outer, external surfaces of the structure or article. The three-dimensional 3D-printed structure can serve for specific applications such as filtration, chromatography, or sorption, such as by means of photoreduction or photo-oxidation pathways under ultraviolet (UV) irradiation, infrared (IR) irradiation, or visible light (VIS) irradiation. Further components, such as a catalytically active material (e.g. a catalyst), can be deposited on the surfaces, both externally and internally, for example by impregnation of the three-dimensional porous 3D-printed structure in a bath comprising a liquid comprising a catalytically active material or a catalyst precursor.

Upon building a 3D structure using 3D printing in a layered fashion, a so-called green body is obtained. It is known that such green bodies have limited mechanical stability, with the risk of collapse thereof. To improve the mechanical stability, drying is typically carried out during or shortly after the building step. During drying, the solvent is removed from the green body, thereby obtaining the three-dimensional structure or article having improved mechanical stability compared to its green body.

A known drying method for porous green bodies is thermal drying, by heating the green body, for example in an oven. Such thermal drying is often carried out at atmospheric pressure.

Another drying method involves drying at reduced pressure (vacuum drying). The temperature is increased above the evaporation temperature of the solvent at the pressure at which the drying is carried out. Consequently, the solvent evaporates and is subsequently removed from the green body and from the oven.

'Sintering Process Optimization for 3YSZ Ceramic 3D-Printed Objects Manufactured by Stereolithography', Sang Huyn Ji, Da Sol Kim et al, Nanomaterials 2021, 11, 192, 1-12 discloses 3D-printing by supportless stereolithography of a 3-YSZ (3 mol% yttria-stabilized zirconia) ceramic green body with 50 vol% of ceramic content. The green body was dried in an oven at 80 °C for 1 hour, and layer separation and cracking was noticed. Reduced layer separation and cracking was noticed when the drying was carried out at 25 °C under vacuum for 1 hour.

'Fabrication and characterisation of ceramics via low-cost DLP 3D printing', Giftymol Varghese, Mónica Moral et al, Boletín de la Sociedad Española de Cerámica y Vidrio, Volume 57, Issue 1, pages 9-18 (2018) discloses 3D-printing by means of DLP of 3-YSZ and 8-YSZ ceramic structures, using ethanol as a solvent. The 3-YSZ green body was dried at 60 °C for a duration between 6 hours and 12 hours, followed by drying at 140 °C for 3 hours to evaporate the volatile solvents. The 8-YSZ green body was dried at 60 °C, since further drying at 140 °C lead to crack formation during the sintering process carried out after drying.

A first disadvantage of the abovementioned drying methods of porous green bodies is that structural defect such as cracks can be formed in the final porous articles. Further, the green body may even collapse upon drying. A possible solution to reduce formation of structural defects, in particular for drying at atmospheric pressure and at elevated temperature, is to maintain a certain degree of humidity in the drying chamber. However, a certain amount of energy is required to maintain an elevated humidity at the elevated drying temperature. Another disadvantage of these prior art drying methods is that rather long drying times are needed, in the range of hours, to ensure controlled drying including drying of inner parts of the 3D structure and to reduce the risk of formation of (structural) defects in the final porous article.

'Single-anchor support and supercritical CO2 drying enable highprecision microfabrication of three-dimensional structures', Shoji Maruo, Takuya Hasegawa et al, Optics Express Volume 17, Issue 23, pages 20945-20951 (2009) discloses in section 2.1 a drying process for a 3D-printed structure having (sub)micron porosity. First, the green body is immersed in glycol ether ester to remove unsolidified photopolymer. Next, the structure is immersed in hexane to exchange the glycol ether ester with hexane, because hexane has a better solubility in supercritical CO₂ (scCO₂). Supercritical CO₂ is used to dissolve the hexane, wherein in a first step scCO₂ is introduced in a drying chamber which is at 40 °C and at a pressure of 12 MPa to keep the CO₂ in supercritical condition, followed in a second step by reducing the pressure of the chamber to 8 MPa for 80 minutes to carry out the drying of the green body, i.e. to carry out the dissolution of the hexane.

A disadvantage of the abovementioned drying method using supercritical CO₂ is that the first solvent (glycol ether ester) used to remove any unsolidified photopolymer, must first be exchanged for another solvent (hexane) with a better solubility in scCO₂, to ensure that drying can be achieved. This solvent exchange is done by immersion of the green body in hexane. This drying method therefore requires an additional process step (exchange of solvents) and the use of solvents. Further, the immersion of the green body in the solvent(s) increases the risk of structural or mechanical damage to the green body and thus to the final 3D-printed structure due to handling.

### Summary of the invention

The present invention aims to overcome one or more of the above drawbacks. It is an aim of the invention to provide a three-dimensional porous structure or article and a method of producing the three-dimensional porous structure or article, wherein the method has a reduced energy consumption and a reduced number of process steps and/or chemicals (such as solvents) to be used. It is an aim to provide a method allowing to produce a three-dimensional porous structure having reduced, and possibly absence of, mechanical or structural defects, such as cracks or collapsing of the structure, in particular during drying of the porous green body.

According to a first aspect of the invention, there is therefore provided a method for producing a three-dimensional porous structure using 3D printing as set out in the appended claims. A method for producing a three-dimensional porous structure as described herein comprises the steps of building a three-dimensional porous green body and drying the three-dimensional porous green body, thereby obtaining the three-dimensional porous structure.

With a porous structure is meant in the light of the present invention that the structure comprises interconnected pores, i.e. can be seen as an open-cell structure.

The three-dimensional porous green body is obtained in a layered fashion from a paste, also named a build material paste, comprising a carrier material, a binder material and a solvent. The carrier material comprises or substantially consists of an inorganic material. Advantageously, the inorganic material comprises or substantially consists of one or more of a ceramic material and a(n inorganic) carbon-based material, e.g. a carbonaceous material.

Drying the three-dimensional porous green body comprises passing a feed of a first supercritical fluid through the pores of the green body. Upon drying, the solvent is removed from the three-dimensional green body. Advantageously, the drying comprises dissolving the solvent in the supercritical fluid.

Advantageously, the solvent comprises one or more of water, methanol, ethanol or isopropanol.

Advantageously, the (first) supercritical fluid is supercritical carbon dioxide (scCO₂).Alternatively, the first supercritical fluid may be supercritical water, supercritical methanol, or supercritical ethanol.

According to an embodiment, the solvent is water and the (first) supercritical fluid is scCO₂. In this case the drying step comprises dissolving the water in the scCO₂.

Advantageously, when the supercritical fluid is scCO₂, the porous green body is dried at a temperature between 20 °C and 75 °C, preferably between 30 °C and 40 °C, and at a pressure between 0.1 MPa and 15 MPa, preferably between 9 MPa and 12 MPa.

Advantageously, the method according to the present invention further comprises calcining the three-dimensional porous structure. Advantageously, the calcination comprises contacting the three-dimensional porous structure with a gas flow comprising oxygen, for example air, preferably dry air, or an inert gas at a temperature between 150 °C and 900 °C, preferably between 400 °C and 600 °C. The calcination can involve removing the binder material from the three-dimensional porous structure.

Advantageously, the method according to the present invention further comprises impregnating the three-dimensional porous structure with a second supercritical fluid comprising a catalytically active material and/or a catalyst precursor dissolved therein. Advantageously, upon impregnating the catalytically active material and/or the catalyst precursor thereof is deposited on at least part of a surface of the three-dimensional porous structure. The surface onto which the catalytically active material and/or the catalyst precursor is deposited can be any external and/or internal surface.

Advantageously, the catalytically active material can be a photo-catalytically active material and/or an electro-catalytically active material. With a photo-catalytically active material is meant in the light of the present invention that the catalytically active material can be activated, i.e. can be an activated catalyst, upon exposure thereof to an irradiation. Advantageously, the irradiation comprises or substantially consists of one or more of ultraviolet irradiation, infrared irradiation, or irradiation having a wavelength in the wavelength range of visible light. With an electro-catalytically active material is meant in the light of the present invention that the catalytically active material can be activated, i.e. can be an activated catalyst, upon exposure thereof to a current or a voltage.

Advantageously, the catalyst precursor comprises or substantially consists of a metal salt comprising one or more elements from Group VIIIb 8, Group VIIIb 10, and/or Group lb. Preferred elements include cobalt (Co), nickel (Ni), iron (Fe) and Palladium (Pd).

Advantageously, the second supercritical fluid is supercritical carbon dioxide (scCO₂). Alternatively, the second supercritical fluid is supercritical water, supercritical methanol, or supercritical ethanol.

Advantageously, when the (second) supercritical fluid is scCO₂, the porous structure is impregnated at a temperature between 20 °C and 75 °C, preferably between 30 °C and 40 °C, and at a pressure between 0.1 MPa and 15 MPa, preferably between 1 MPa and 10 MPa.

Advantageously, the method according to the present invention further comprises calcining the impregnated porous structure. Advantageously, the calcination comprises contacting the impregnated three-dimensional porous structure with a flow comprising oxygen, for example air, preferably dry air, or an inert gas at a temperature between 150 °C and 900 °C, preferably between 400 °C and 600 °C.

Advantageously, the method according to the present invention further comprises a reduction treatment of the three-dimensional porous structure. Advantageously, the reduction treatment comprises contacting the porous structure with a flow comprising hydrogen. Advantageously, the reduction treatment converts the catalyst precursor into a catalyst.

Advantageously, the three-dimensional porous green body is built by a 3D-printing technique also called additive manufacturing. In other words, the porous structure obtained upon drying the porous green body is advantageously a three-dimensional porous 3D-printed structure. The porous green body can be obtained by means of any 3D-printing technology that allows to obtain a (three-dimensional) porous structure. Examples of suitable 3D-printing technologies include Direct Ink Writing (DIW; also known as (micro-)extrusion through a nozzle or an orifice), three-dimensional fibre or filament deposition (3D FD), and Direct Light Processing (DLP). Of these, 3D-printing techniques involving filament deposition in multiple stacked layers are preferred. The filament is obtained by extruding the build material paste through a nozzle.

According to a second aspect of the invention, there is provided a three-dimensional porous structure as set out in the appended claims. The structure is advantageously obtained by 3D printing. A three-dimensional porous structure as described herein comprises an inorganic material comprising interconnected pores. Advantageously, the inorganic material is as described hereinbefore. The 3D porous structure further comprises a catalytically active material deposited on at least part of a surface of the pores of the structure, advantageously of the inorganic material. Advantageously, the catalytically active material is as described hereinbefore, and can be a catalyst precursor which has been activated.

Advantageously, the grains of the catalytically active material have an average grain size of at most 1 µm, preferably at most 0.75 µm, more preferably at most 0.5 µm, as determined by Energy Dispersive X-Ray Analysis (EDX). Advantageously, the average grain size of the grains of catalytically active material is between 0.01 µm and 1 µm, preferably between 0.05 µm and 1 µm, more preferably between 0.05 µm and 0.75 µm, as determined by EDX. The grains of catalytically active material can be present as separate particles or crystallites, and/or as agglomerates of a plurality of particles or crystallites.

The three-dimensional porous structure can be obtained or manufactured by means of any method suitable for obtaining such a structure. Advantageously, and in particular, the three-dimensional porous structure is produced by means of methods of the present disclosure.

One of the advantages of methods of the present invention, compared to prior art, is that the drying of the porous green body may be carried out in a controlled environment, without the need for elevated temperatures, reduced pressure and/or maintenance of a certain degree of humidity. Such conditions would cause mechanical stress in the porous green body and give rise to deformation and/or cracking and/or breaking of the green body. Further, no additional steps are required to exchange the solvent used to build the green body with another solvent. Hence, the methods of the invention allow for producing a porous structure in a more efficient way and/or with a higher yield (i.e. reduced amount of damage to the structure and reduced number of structures showing defects).

### Brief description of the figures

Aspects of the invention will now be described in more detail with reference to the appended drawings, wherein same reference numerals illustrate same features and wherein:
Figure 1 schematically represents possible process steps of methods according to the invention.
Figures 2A and 2B represent three-dimensional porous 3D-printed structures obtained by drying the three-dimensional porous 3D-printed green body with conventional drying techniques.
Figure 3A represents a three-dimensional porous green body prior to drying; Figures 3B and 3C represent a three-dimensional porous 3D-printed structure obtained by drying the green body of Figure 3A according to methods of the invention.
Figure 4 represents an impregnated three-dimensional porous 3D-printed structure, wherein the impregnation with a catalyst precursor was performed according to state of the art impregnation techniques.
Figures 5A and 5B show EDX-results for a 3D porous 3D-printed structure after impregnation by means of state of the art impregnation techniques.
Figure 6A represents a calcined three-dimensional porous 3D-printed structure obtained according to the invention; Figure 6B shows the calcined three-dimensional porous 3D-printed structure of Figure 6A after impregnation according to the invention; Figure 6C shows the impregnated, calcined 3D porous 3D-printed structure of Figure 6B after a further calcination according to methods of the invention.
Figures 7A and 7B show SEM-images of a three-dimensional porous 3D-printed carbon structure according to the invention.
Figures 8A and 8B show SEM-images of a three-dimensional porous 3D-printed silica structure according to the invention.
Figure 9 shows the conversion of benzylalcohol and the selectivity into benzaldehyde of reference and inventive 3D porous 3D-printed structures.

### Description of embodiments

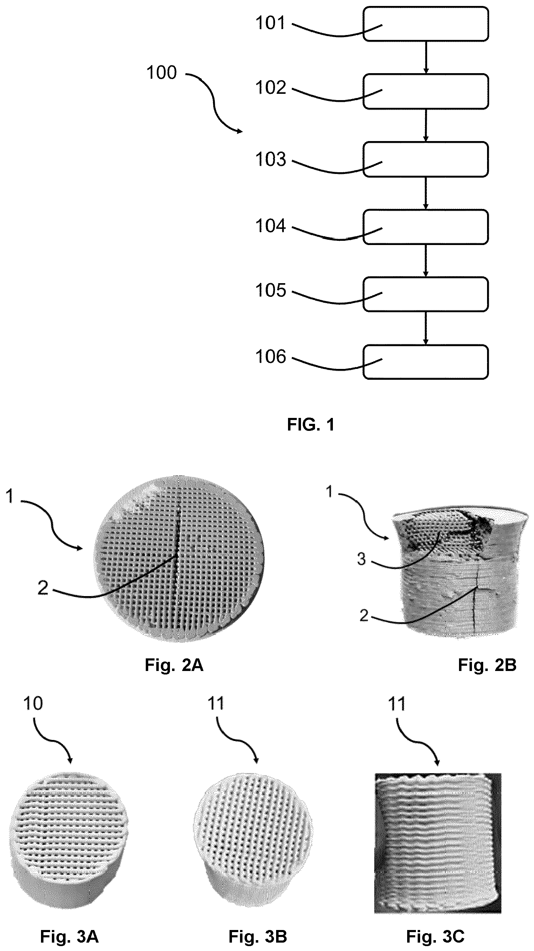

Referring to Figure 1, according to an aspect of the present invention, a method 100 for producing a porous structure as described herein comprises the steps of building a three-dimensional porous green body 101 and drying 102 the porous green body, thereby obtaining the three-dimensional porous structure.

The porous green body is obtained in a layered fashion from a paste comprising a carrier material, a binder material and a solvent.

The carrier material comprises or substantially consists of an inorganic material. Advantageously, the inorganic material is a ceramic material, a carbon-based material, e.g. a carbonaceous material, or a mixture of both. Advantageously, the carrier material is a particulate material. The particulate material can have an average particle size of between 100 nm and 100 µm, such as between 250 nm and 50 µm, between 500 nm and 20 µm or between 1 µm and 10 µm.

Examples of ceramic materials that can be used are one or a combination of alumina (aluminium oxide), silica (silicon dioxide), zirconium oxide, magnesium oxide, ceria (cerium(IV) oxide), and beryllium oxide. Examples of carbon-based materials that can be used are one or a combination of graphene, graphene oxide, carbon and carbon nanotubes (CNT).

Advantageously, the solvent substantially comprises or consists of water or an alcohol, particularly a C₁-C₅ alcohol, or a C₁-C₃ alcohol, such as methanol, ethanol or isopropanol, and combinations thereof. Preferably, the solvent comprises or consists of water.

The binder material can comprise or substantially consist of an inorganic compound, an organic compound, or a mixture of one or more inorganic and/or one or more organic compounds. Advantageously, the binder comprises or substantially consists of an organic compound. The binder advantageously is capable of modifying the rheology or flow properties, and the (initial) mechanical properties of the build material paste under the influence of pressure. Such binder materials are well known to the skilled person. The binder material may be a plasticizer, a hydrocolloid, a cellulose derivate such as methyl cellulose, ethyl cellulose, carboxy-methylcellulose, hydroxypropyl methylcellulose (HPMC), a polymeric alcohol in particular polyvinyl alcohol, a poly-alcohol for example polyethylene glycol, polyvinylpyrrolidone, polyvinylacetate, a photosensitive resin, or combinations of two or more of the aforementioned organic binder materials. It shall be clear to the skilled person that other materials showing equivalent properties can be used as well. Examples of inorganic binder materials suitable for use with this invention include clay materials, bentonite, kaolin, Al₂O₃, boehmite or equivalent materials considered suitable by the skilled person.

The build material may further comprise one or more plasticizers. Suitable plasticizers for use with the present invention include monomeric esters of typically Cs to C₁₄ alcohols and organic acids which may be saturated or unsaturated, and may either be mono- or polycarboxylic organic acids. Examples of organic acids suitable for use in the plasticizer of this invention include esters of trimellitic acid (for example octyl trimellitate-TMO), sebacic acid (for example dioctyl sebacate-DOS, diisodecyl sebacate-DIDS), azeleic acid (for example dioctyl azelate-DOZ), adipic acid (for example dioctyl adipate-DOA, diisodecyl adipate-DIDA, ditridecyl adipate-DTDA, phthalic acid (for example dibutyl phthalate-DBP, dioctyl phthalate-DOP, diundecyl phthalate-DUP, ditridecyl phthalate-DTDP), citric acid, benzoic acid, glutaric acid, fumaric acid, maleic acid, oleic acid (for example butyl oleate), palmitic acid and azelaic acid and mixtures of two or more hereof. Esters of phosphoric acid may also be used. Preferably, the plasticizerhas a molecular weight of at least 300 g/mol, more preferably at least 350 g/mol.

The porous green body is built in a layered fashion, by building it layer by layer, particularly with a layered manufacturing technique, in which a subsequent layer is built on top of a previously built layer. Layered manufacturing techniques are well-known to the skilled artisan. Hence, the porous green body and the resulting porous structure comprise a structure made of layers that are placed on top of each other, as in a stack.

Examples of suitable 3D-printing techniques include Direct Ink Writing (DIW; also known as (micro-)extrusion through a nozzle or an orifice, or robocasting), three-dimensional fibre or filament deposition (3D FD), Direct Light Processing (DLP), and stereolithography (SLA). All these techniques will be commonly named 3D-printing techniques in the following.

Depending on the process used to build the porous green body, in particular the 3D-printing technique, the build material paste may have a higher or a lower viscosity. For example, the viscosity can be measured by means of a rheology measurement, for example a rheology measurement performed on a Haake Mars rheometer with the build material paste confined between two parallel plates at 25 °C. The optimal viscosity ranges and/or shear rates for different techniques to build the porous green body are typically known in the field. When an extrusion-based 3D-printing technique is applied, the paste advantageously has a viscosity upon printing (so-called printable (shear thinning) viscosity) between 10 Pa.s and 10⁶ mPa.s, preferably between 10² mPa.s and 10⁶ mPa.s, at a shear rate of about 0.01 s⁻¹ and at 25 °C. In the case of DLP, the build material paste advantageously has a viscosity upon printing between 1 Pa.s and 1000 Pa.s, preferably between 10 Pa.s and 100 Pa.s, at a shear rate of about 100 s⁻¹ and at 25 °C. Such a viscosity allows to provide each (green) layer that is deposited with sufficient mechanical strength to allow solidification of the green layer by irradiation, in particular UV irradiation, without the layer collapsing prior to finalising the solidification.

A particularly suited 3D-printing technique is (micro-)extrusion, comprising extruding of a viscous paste or build material through one or more nozzles or orifices in the form of filaments, also called fibres or strands. Advantageously, stacked layers of filaments are deposited on a printing surface, with filaments of consecutive layers being connected to each other at one or more connection points. This results in the green body built as a plurality of stacked layers of interconnected filaments forming interconnected pores, channels or voids. Advantageously, the filaments within one layer are deposited at a distance from each other, thereby forming (macro)pores between the strands or filaments. Additionally, or alternatively, the filaments may have an internal porosity. Advantageously, the filaments are deposited in such a way that filaments of adjacent layers cross each other, or are at least partially arranged on top of one another. Hence, the filaments of adjacent layers make contact resulting in connections between adjacent/consecutive layers. Filaments may be formed on a printing surface by relative movement of the nozzle and the printing surface with respect to each other according to a predetermined pattern.

The three-dimensional green body may have various three-dimensional porous shapes, such as a honeycomb structure, a lattice structure, or a meshed structure. Advantageously, at least one portion of the porous green body has interconnected pores (e.g. channels) which are accessible from an exterior surface of the structure.

The porosity of the three-dimensional green body can be varied according to the final application or use of the porous structure. The porosity can be varied by adapting the process parameters, in particular the process parameters during the building step, such as the interdistance between filaments, the thickness of the filaments and the stacking factor (interpenetration depth between filaments of consecutive layers). The 3D green body, and the 3D porous structure obtained after drying of the 3D green body, can be macroporous, mesoporous or microporous, or can comprise a combination of macropores, mesopores and/or micropores. According to the IUPAC definition, micropores are pores having a diameter of less than 2 nm. According to the IUPAC definition, mesopores have a diameter between 2 nm and 50 nm. According to the IUPAC definition, macropores have a diameter of greater than 50 nm.

Advantageously, the pores between adjacent filaments are mesopores or macropores, or a combination thereof. The filaments itself can be porous as well. Advantageously, when the filaments are porous, they are mesoporous, microporous, or a combination thereof. The (micro)porosity of the filaments is usually obtained by the porosity of the carrier material and/or by voids formed between the carrier material particles. Alternatively or additionally, the filaments can be made (micro)porous by a post-treatment. Such a post-treatment can be carried out on the green body, i.e. after building the green body and prior to drying the green body. Alternatively or additionally, and preferably, the post-treatment is carried out on the porous structure.

The volume of macropores may vary depending on the interfilament distance and filament thickness. Advantageously, the 3D porous structure has a macroporosity between 40 vol.% and 80 vol.%, preferably between 60 vol.% and 80 vol. %. It will however be clear to the skilled person that other macroporosities are possible as well. The porosity of the filaments as such may vary within wide ranges. The porosity of a filament can be expressed as the percentage of the volume of the filament that consists of pores, i.e. is "open". Advantageously, the filaments have a porosity between 30 vol.% and 80 vol.%, preferably between 40 vol.% and 80 vol%, based on the total volume of the filaments.

The 3D porous structures according to aspects of the invention can be built utilizing filaments which advantageously have a diameter in the range between 20 µm and 20 mm, advantageously between 40 µm and 10 mm, advantageously between 60 µm and 5 mm, with advantageous values being 80 µm, 100 µm, 200 µm, 400 µm, 600 µm, 800 µm, 1 mm, 2mm. All filaments within a same layer of the structure typically have a same diameter, and the filament diameter may be the same in all layers of the structure.

The interfilament distance, e.g. within a same layer, may vary between 1 nm and 50 mm, and is advantageously between 10 nm and 25 mm, advantageously between 100 nm and 15 mm, advantageously between 1 µm and 10 mm, advantageously between 10 µm and 5 mm, such as between 100 µm and 2.5 mm, advantageously smaller than or equal to 1.5 mm, or smaller than or equal to 1 mm. The inter filament distance can change within a same layer, e.g. to obtain a porosity gradient.

Examples of post-treatments are chemical treatments and heat treatments. A chemical treatment can comprise exposing the porous green body or the porous structure to a chemical compound which reacts with the porous green body or the porous structure, respectively, thereby forming (micro)pores. Such a chemical treatment can comprise etching of the surface of the filaments or strands, or dissolving the binder in the chemical compound to remove the binder. A heat treatment can include a calcination. The calcination can comprise decomposing the binder of the porous structure, thereby removing it from the porous structure.

The porous green body, and the porous structure obtained after drying of the green body can have a wide variety of geometries. The green body is advantageously a monolith or comprises several connected monoliths. The monolith can have a cuboid or cylindrical shape, without being limited thereto.

Drying 102 the porous green body comprises contacting the green body with a first supercritical fluid. This drying involves passing a feed of a first supercritical fluid through the pores of the green body. The first supercritical fluid removes the solvent from the green body. Advantageously, the solvent is removed by dissolution thereof in the supercritical fluid.

Advantageously, the first supercritical fluid is supercritical carbon dioxide (scCO₂), supercritical water, supercritical methanol, or supercritical ethanol. Preferably, the first supercritical fluid is scCO₂.

A supercritical fluid is defined as any substance at a temperature and a pressure above its critical point. It can diffuse through solids like a gas, and it can dissolve materials like a liquid. The behaviour of a fluid in the supercritical state can be described as that of a very mobile liquid. The solubility behaviour approaches that of the liquid phase while penetration into the pores of a structure is facilitated by the gas-like transport properties.

According to an embodiment, the solvent is water and the first supercritical fluid is scCO₂, wherein drying comprises dissolving the water in the scCO₂. Advantageously, upon dissolving the water in the scCO₂, the water is removed from the porous green body.

Advantageously, when the first supercritical fluid is scCO₂, the porous green body is dried at a temperature between 20 °C and 75 °C, such as between 25 °C and 60 °C, preferably between 27 °C and 50 °C, more preferably between 30 °C and 40 °C, for example at a temperature of 35 °C or 40 °C.

Advantageously, when the first supercritical fluid is scCO₂, the porous green body is dried at a pressure between 0.1 MPa and 15 MPa, such as between 1 MPa and 14 MPa, preferably between 5 MPa and 13 MPa, more preferably between 9 MPa and 12 MPa.

Advantageously, when the first supercritical fluid is scCO₂, the porous green body is dried at a temperature between 20 °C and 75 °C, preferably between 30 °C and 40 °C, and at a pressure between 0.1 MPa and 15 MPa, preferably between 9 MPa and 12 MPa. Advantageously, at the selected temperature and pressure, the supercritical CO₂ has a density between 0.6 g/cm³ and 1 g/cm³, preferably between 0.65 g/cm³ and 0.75 g/cm³, for example 0.7 g/cm³. The inventors have noticed that the best drying results are obtained at a density between 0.65 g/cm³ and 0.75 g/cm³.

It has been observed that methods of the invention allow for drying the three-dimensional green body with great reduction of structural damages such as deformations and cracks. This may be due to the (first) supercritical fluid showing little to no surface tension effects. The very low amount, or absence, of surface tension effects surprisingly seems to allow for an isotropic, for example isobaric drying. In other words, the drying conditions are such that the pressure applied to the three-dimensional porous green body are the same at every area of the green body, thereby allowing very homogeneous drying.

Advantageously, the method according to the present invention further comprises calcining 103 the three-dimensional porous structure. Advantageously, the calcination 103 comprises contacting the porous structure with a (gas) flow comprising oxygen or an inert gas at a temperature between 150 °C and 900 °C, preferably between 250 °C and 750 °C, for example between 300 °C and 700 °C, more preferably between 400 °C and 600 °C, such as between 450 °C and 550 °C, for example between 500 °C and 525 °C. The flow comprising oxygen can be air, preferably dry air. Examples of the inert gas are nitrogen, helium or argon, without being limited thereto. Advantageously, the flow comprising oxygen or an inert gas is passed through the pores of the three-dimensional porous structure.

Advantageously, the method according to the present invention further comprises impregnating 104 the three-dimensional porous structure with a second supercritical fluid comprising a catalytically active material and/or a catalyst precursor dissolved therein. Advantageously, upon impregnation 104 the catalytically active material and/or the catalyst precursor is deposited on at least part of a surface of the porous structure.

The surface onto which the catalytically active material and/or the catalyst precursor or catalytically active material is deposited can be any external surface of the three-dimensional structure and/or an internal surface thereof. The external surface may include an outer surface of the three-dimensional structure, such as an outer surface of outermost or exposed filaments. Advantageously, the catalytically active material and/or catalyst precursor is deposited on at least a part of the internal surface of the three-dimensional porous structure, i.e. on part of the surfaces of the pores of the porous structure, including pores or voids formed within the filaments, pores or voids between carrier material particles, and pores or voids within the carrier material particles.

Advantageously, the catalyst precursor comprises or substantially consists of a metal salt comprising one or more elements from Group VIIIb 8, Group VIIIb 10, and/or Group lb. Preferred elements include cobalt (Co), nickel (Ni), iron (Fe) and palladium (Pd), but also platinum (Pt), rhodium (Rh), silver (Ag), zinc (Zn), ruthenium (Ru) and copper (Cu) can be used.

Advantageously, the catalyst precursor is selected from the group consisting of nitrates, carbonates, acetates, chlorides, alkoxides, hydroxides, oxalates, complexes formed by a polyacid or an acid-alcohol and its salts, complexes formed with acetylacetonates, or any other inorganic derivative soluble in an alcoholic and/or polyalcoholic solution. Advantageously, the catalyst precursor is a complex formed with an acetylacetonate, for example a hexafluoroacetylacetonate hydrate. Examples of such complexes are Fe(hfac)₂.H₂O, Co(hfac)₂H₂O, Pd(hfac)₂.H₂O, Ni(hfac)₂.H₂O, Cu(hfac)₂.H₂O (bis(1,1,1,6,6,6-hexafluoropentane-2,4-dionato)copper(II) monohydrate), and Zn(hfac)₂.H₂O.

Advantageously, the second supercritical fluid is supercritical carbon dioxide (scCO₂), supercritical water, supercritical methanol, or supercritical ethanol. Preferably, the second supercritical fluid is scCO₂.

Advantageously, the catalytically active material and/or the catalyst precursor is soluble in the second supercritical fluid. Advantageously, high amounts of the catalytically active material and/or the catalyst precursor can be deposited. For example, it is possible to obtain a 3D porous structure comprising 20 % by weight or more, such as about 25 % by weight, of nickel, based on the total weight of the 3D porous structure after impregnation. This is considered a high amount when comparing to conventional loading, which is known in the art to be typically limited to at most 15 % by weight of nickel for the same 3D porous structure.

Advantageously, no solvent is used together with the second supercritical fluid to dissolve the catalytically active material and/or the catalyst precursor. In other words, the impregnation according to the invention is advantageously solvent-free. Alternatively, an organic solvent, such as an alcohol, for example ethanol, can be used to improve the solubility of the catalytically active material and/or the catalyst precursor in the second supercritical fluid.

Advantageously, when the second supercritical fluid is scCO₂, the porous structure is impregnated at a temperature between 20 °C and 75 °C, such as between 25 °C and 60 °C, preferably between 27 °C and 50 °C, more preferably between 30 °C and 40 °C, for example at a temperature of 35 °C or 40 °C.

Advantageously, when the second supercritical fluid is scCO₂, the porous structure is impregnated at a pressure between 0.1 MPa and 15 MPa, preferably between 0.5 MPa and 12 MPa, more preferably between 1 MPa and 10 MPa, such as between 5 MPa and 10 MPa.

Advantageously, when the second supercritical fluid is scCO₂, the porous structure is impregnated at a temperature between 20 °C and 75 °C, preferably between 30 °C and 40 °C, and at a pressure between 0.1 MPa and 15 MPa, preferably between 1 MPa and 10 MPa. Advantageously, at the selected temperature and pressure, the supercritical CO₂ has a density between 0.6 g/cm³ and 1 g/cm³, preferably between 0.65 g/cm³ and 0.75 g/cm³, for example 0.7 g/cm³. The inventors have noticed that the best impregnation results are obtained at a density between 0.65 g/cm³ and 0.75 g/cm³.

The inventors have noticed that methods of the invention advantageously allow to deposit a catalytically active material and/or a catalytic precursor in a very homogeneous and uniform way. Consequently, a three-dimensional porous structure comprising a uniformly deposited catalyst, i.e. catalytically active material, is advantageously obtained.

The inventors have further noticed that methods of the invention advantageously limit the agglomeration of the catalyst precursor and/or the catalytically active material. This advantageously results in the deposition of the catalytically active material and/or catalyst precursor as particles or grains having a smaller particle size as compared to particle sizes obtained by prior art methods, which is typically 5 µm or higher, such as at least 10 µm, up to even 30 µm. Consequently, blocking of the pores of the 3D porous structure is advantageously reduced, even minimised, and a better accessibility of the catalytically active material and/or the catalyst precursor in the 3D porous structure may be achieved.

In the light of the present invention, "a grain" is used to indicate an agglomerate of smaller particles or crystallites.

It was further noticed that methods of the present invention advantageously allow a narrow particle size distribution of the particles or grains of the catalytically active material and/or the catalyst precursor deposited on at least part of a surface of the 3D porous structure. Consequently, a more uniform particle size is achieved compared to the particle size distribution and the particle size uniformity as realised by means of conventional impregnation techniques, such as immersion in a liquid comprising the catalytically active material and/or catalyst precursor. For example, the grains or particles of catalytically active material and/or catalyst precursor deposited on the 3D porous structure by means of conventional impregnation techniques typically have an average size between 5 µm and 30 µm.

Advantageously, the particles or grains of the catalytically active material and/or the catalyst precursor deposited on at least part of the pores of the 3D porous structure, in particular the pores within the inorganic material comprised therein, have an average particle size, as determined by EDX, of at most 2 µm, such as at most 1.75 µm, preferably at most 1.5 µm, for example at most 1.25 µm, at most 1.2 µm, at most 1.1 µm, more preferably at most 1 µm. Advantageously, the average particle size of the catalytically active material and/or the catalyst precursor deposited on the 3D porous structure, as determined by EDX, is between 0.01 µm and 2 µm, such as between 0.025 µm and 1.75 µm, preferably between 0.05 µm and 1.5 µm, more preferably between 0.05 µm and 1.25 µm, most preferably between 0.05 µm and 1 µm.

Further, methods of the invention also allow to deposit a catalytically active material and/or a catalytic precursor at high depths within the porous structure (i.e. a high penetration depth of the supercritical fluid) and throughout the entire structure, on all external and internal surfaces. Hence, it is possible to obtain a three-dimensional porous structure comprising a catalyst at specific areas of the structure, even deep into the porous structure.

The inventors believe that the excellent uniformity and penetration depth are obtained because supercritical fluids as used show a low viscosity, a high diffusivity, and a very low to zero surface tension. It was further noticed that impregnation according to the invention does not lead to swelling of the porous structure, thereby reducing the risk for deformation and damage.

Advantageously, once the impregnation is finished, the temperature of the second supercritical fluid is increased above the critical temperature and/or the pressure is reduced below the critical pressure to change the second supercritical fluid to a gas that is removed from the porous structure. Consequently, there is no need for an additional drying step which could potentially negatively impact the mechanical strength or structure of the porous structure.

Advantageously, the method according to the present invention further comprises calcining 105 the impregnated three-dimensional porous structure. Advantageously, the calcination 105 comprises contacting the impregnated 3D porous structure with a flow comprising oxygen or an inert gas, at a temperature between 150 °C and 900 °C, preferably between 250 °C and 750 °C, for example between 300 °C and 700 °C, more preferably between 400 °C and 600 °C, such as between 450 °C and 550 °C, for example between 500 °C and 525 °C. The flow comprising oxygen can be air, preferably dry air. Examples of the inert gas are nitrogen, helium or argon, without being limited thereto. Advantageously, the flow comprising oxygen or an inert gas is passed through the pores of the impregnated 3D porous structure. Advantageously, the calcination treatment converts the metal salt of the catalyst precursor into a metal oxide.

Advantageously, the method according to the present invention further comprises a reduction treatment 106 of the impregnated three-dimensional porous structure. Advantageously, the reduction treatment 106 comprises contacting the porous structure with a flow comprising hydrogen (H₂). Advantageously, the flow comprising hydrogen is passed through the pores of the impregnated porous structure. Advantageously, the reduction treatment 106 converts the catalyst precursor into a catalytically active material, i.e. a catalyst, for example the metal salt into the pure metal. A three-dimensional porous structure comprising a catalyst is thereby obtained.

Advantageously, the catalyst is present at at least part of the surface of the three-dimensional porous structure in the form of grains or particles, for example nanoparticles, which advantageously form a layer or coating or film. According to the IUPAC definition, a nanoparticle is a particle of any shape with dimensions in the 1 nm to 100 nm range.

The calcination 105 and the reduction treatment 106 can be performed in a single treatment step.

The impregnation 104 and optionally the calcination 105 and/or the reduction treatment 106 can be repeated between 1 and 20 times, such as between 1 and 10 times. Subsequent impregnation steps can comprise the same catalytically active material and/or catalyst precursor, for example to apply a larger amount of the catalytically active material and/or the catalyst precursor, and thus the catalyst. Alternatively, subsequent impregnation steps can comprise different catalytically active materials and/or catalyst precursors, for example to apply different types of catalytically active materials and/or catalyst precursors, and thus catalysts.

According to a second aspect of the invention, there is provided a three-dimensional porous structure or article. Advantageously, the 3D porous structure or article comprises interconnected pores and advantageously comprises a network of filaments arranged in a layered and ordered fashion. Advantageously, the porous structure comprises substantially no structural defects, such as cracks or collapsed portions of the structure.

The three-dimensional porous structure or article can be obtained by methods as described in the present disclosure. The porous structure can be obtained by means of suitable 3D-printing techniques as described above, i.e. the structure is a three-dimensional porous 3D-printed structure.

The porous structure can comprise a catalytically active material, advantageously arranged on accessible external (exposed) and/or internal surfaces of the porous structure. Advantageously, the catalyst is deposited on at least part of the surface of the pores of the structure.

One of the advantages of methods of the present invention, compared to prior art, is that the drying of the porous green body is carried out in a controlled environment, without the need for elevated temperatures, reduced pressure and/or presence of a certain degree of humidity, and without deforming or damaging the 3D-printed structure. Further, no additional steps are required to exchange the solvent used to build the green body with another solvent.

### Examples

### Example 1: Building of a porous 3D structure.

Identical three-dimensional alumina green bodies were built by 3D-printing using micro-extrusion. Figure 3A shows such an alumina green body 10. Part of the 3D alumina green bodies 10 were dried in an oven (comparative three-dimensional porous 3D-printed structures) and part of the 3D alumina green bodies 10 were dried according to the invention by means of scCO₂ (three-dimensional porous 3D-printed structures according to the invention) at 35 °C and at a pressure of 9 MPa.

Figures 2A and 2B show a comparative three-dimensional porous 3D-printed structure 1. It is clear that the comparative porous 3D-printed structure 1 shows cracks 2 (Fig. 2A), and was largely damaged, i.e. a portion 3 of the comparative structure 1 has collapsed during drying (Fig. 2B).

Figures 3B and 3C show a three-dimensional porous 3D-printed structure 11 according to the invention. It is clear that no mechanical damage is visible, not even after manipulating the porous 3D-printed structure 11 by hand, such as (trying to) pressing it together (Fig. 3C).

### Comparative Example 2: Impregnation

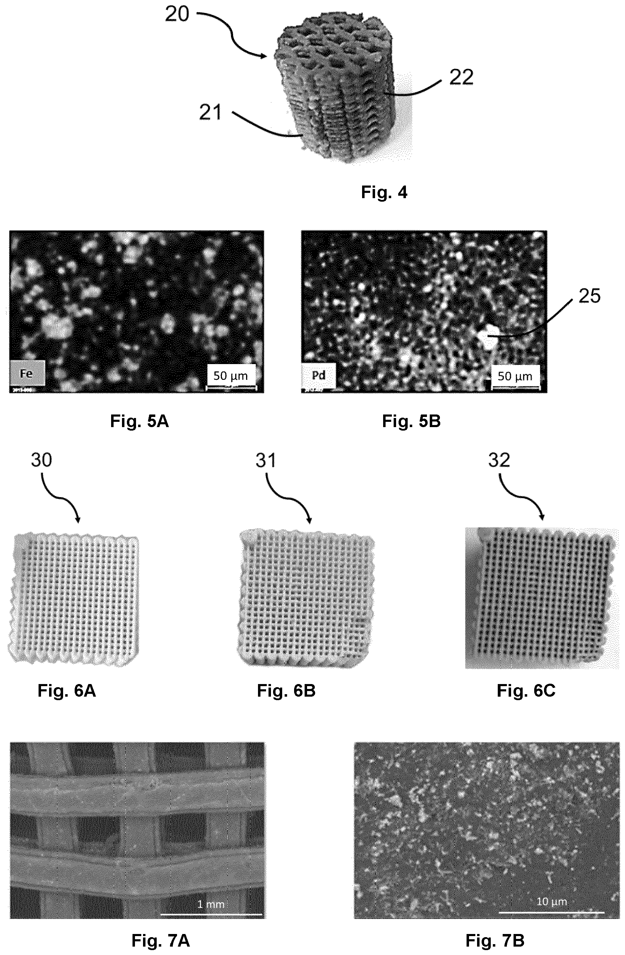

Figure 4 shows a three-dimensional 3D-printed structure 20 subjected to a conventional impregnation procedure. The impregnation was performed by dissolving a catalyst precursor comprising iron (Fe) and palladium (Pd) in ethanol, and immersing the three-dimensional 3D-printed structure in the solution comprising the catalyst precursor. From Fig. 4 it is clear that the impregnation was inhomogeneous, with lighter zones 21 indicating less deposition of catalyst precursor and darker zones 22 indicating a higher concentration of catalyst precursor. Figure 5A and Figure 5B show the EDX results for the presence of iron and palladium, respectively, on the surface of the 3D-printed structure. It is clear that the deposition is not homogeneous. In other words, the particle size of the particles varies largely, indicating a wide particle size distribution. Further, coarse, large particles 25 are also visible, indicating agglomeration of the catalyst precursor.

Figure 6A shows a three-dimensional 3D-printed cuboid silica sample after drying with scCO₂ at 35 °C and at a pressure of 9 MPa and calcination. Calcination was performed by exposing the dried 3D-printed silica sample to dry air at 550 °C. The calcined silica sample was then impregnated with scCO₂ comprising 7 wt.% Co(hfac)₂ precursor (Figure 6B), and again calcined by exposing to dry air at 550 °C. The obtained 3D-printed cuboid silica sample comprising cobalt as catalyst is shown in Figure 6C. It is clear from Figures 6B and 6C that impregnation and further calcination did not significantly damage the sample.

### Example 3

Six 3D-printed substrates having a cuboid shape were impregnated with a cobalt or cobalt and palladium catalyst precursor according to Table 1. Samples No. 1 and 4 were graphene substrates which were functionalised prior to impregnation through an acid treatment process to improve the impregnation efficiency. Samples Nos. 2, 3, 5 and 6 were made from a same type of silica. The treatment protocol as disclosed in 'Physical and chemical characteristics of multiwalled carbon nanotubes functionalized with aminosilane and its influence on the properties of natural rubber composites', Shanmugharaj, A.M., et al., Composites Science and Technology, 2007, Vol. 67, pp. 1813-1822, was followed, using -10 N sulphuric acid and potassium dichromate to form -COOH, -OH and other functional groups on the carbon support to better attract precursors.

The catalyst precursor materials were dissolved in scCO₂. The impregnation was performed at a temperature of 40 °C and at a pressure of 9 MPa, so that the CO₂ had a density of 0.7 g/cm³.

The samples were weighted prior to impregnation and after impregnation (samples 1 and 4) or after calcination at 500 °C (samples 2, 3, 5 and 6). The difference in weight is a measure for the deposition of the catalyst.

**Table 1: Impregnation details for 3D porous 3D-printed substrates**

| **Sample** | **Material** | **Impregnation** | **Calcination** | **Weight difference (g)** |
|---|---|---|---|---|
| 1 | Graphene (acid treated) | 14 wt.% Co(hfac)₂ | No | 0.161 |
| 2 | Si₂O₃ (silica) | 12 wt.% Co(hfac)₂ + 2 wt.% Pd(hfac)₂ | Yes | 0.341 |
| 3 | Si₂O₃ (silica) | 19 wt.% Co(hfac)₂ + 2 wt.% Pd(hfac)₂ | Yes | 0.214 |
| 4 | Graphene (acid treated) | 14 wt.% Co(hfac)₂ | No | 0.093 |
| 5 | Si₂O₃ (silica) | 12 wt.% Co(hfac)₂ + 2 wt.% Pd(hfac)₂ | Yes | 0.346 |
| 6 | Si₂O₃ (silica) | 21 wt.% Co(hfac)₂ + 2 wt.% Pd(hfac)₂ | Yes | 0.417 |

Figures 7A and 7B show SEM-images of sample 1 after impregnation. It is clear that the cobalt particles (catalyst) are evenly distributed on the three-dimensional graphene 3D-printed structure, and that they are also very homogeneous in particle size (i.e. a narrow particle size distribution).

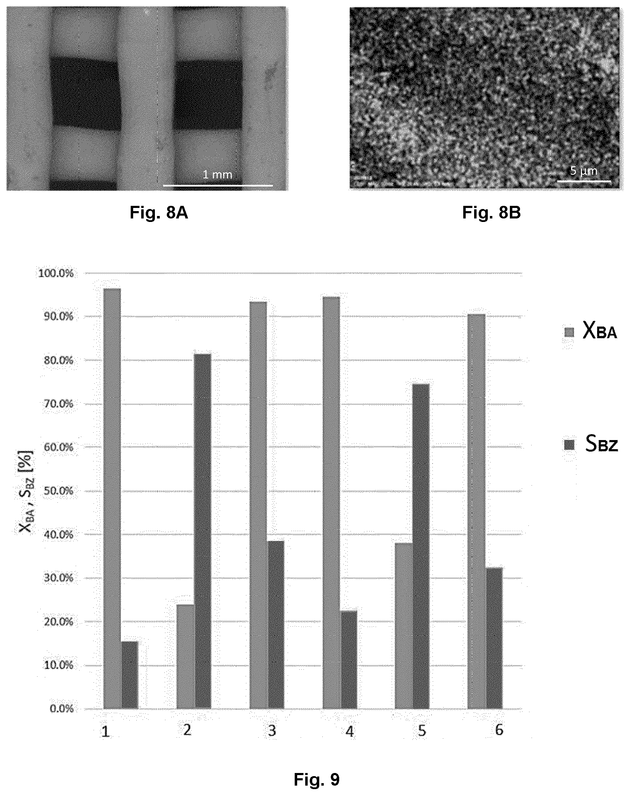

Figures 8A and 8B show SEM-images of sample 6 after impregnation and calcination. It is clear that the catalyst particles are evenly distributed on the three-dimensional Si₂O₃ 3D-printed structure, and that they are also very homogeneous in particle size.

### Example 4

Eight further porous 3D-printed structures, made from silica, graphene and activated carbon respectively, were dried with scCO₂ (temperature and pressure as indicated in example 1), followed by a calcination at 500 °C using dry air and 1 up to 4 impregnation-calcination steps. The details are given in Table 2. Impregnation was performed by dissolving the cobalt-comprising and palladium-comprising catalyst precursors listed in Table 2 in scCO₂. Impregnation was performed at a temperature of 30 °C and at a pressure of 9 MPa, wherein the CO₂ had a density of 0.7 g/cm³. The calcination between subsequent impregnation steps was performed by contacting the impregnated samples with a flow of dry air at a temperature of 500 °C.

**Table 2: Impregnation and calcination details for various 3D porous 3D-printed structures ('/' indicates information not available)**

| **Sample** | 1 | 2 | 3 | 4 | 5 | 6 | 7 | 8 |
|---|---|---|---|---|---|---|---|---|
| **Material** | Silica | Silica | Silica | Silica | Silica | Graphene | Graphene | Activated carbon |
| **Calcination after drying** | 700 °C | 700 °C | 700 °C | 550 °C | 550 °C | 550 °C | 550 °C | 550 °C |
| **Impregnation 1** | 5 wt.% Co(hfac)₂ | 5 wt.% Co(hfac)₂ | 5 wt.% Co(hfac)₂ | 5 wt.% Co(hfac)₂ | 7 wt.% Co(hfac)₂ | 7 wt.% Co(hfac)₂ | 7 wt.% Co(hfac)₂ | 7 wt.% Co(hfac)₂ |
| **Calcination after impr. 1** | Yes | Yes | Yes | Yes | Yes | Yes | Yes | Yes |
| **Weight gain** | 28 % | 41 % | 23 % | 16 % | 21 % | 15 % | 40 % | 13 % |
| **Impregnation 2** | 7 wt.% Co(hfac)₂ | 7 wt.% Co(hfac)₂ | 7 wt.% Co(hfac)₂ | 7 wt.% Co(hfac)₂ | / | 7 wt.% Co(hfac)₂ | 7 wt.% Co(hfac)₂ | / |
| **Calcination after impr. 2** | Yes | Yes | Yes | Yes | / | Yes | Yes | / |
| **Weight gain** | 19 % | 26 % | 19 % | 15 % | / | 4% | 6% | / |
| **Impregnation 3** | 2 wt.% Pd(hfac)₂ | 7 wt.% Co(hfac)₂ | 2 wt.% Pd(hfac)₂ | 7 wt.% Co(hfac)₂ | / | / | / | / |
| **Calcination after impr. 3** | Yes | Yes | Yes | Yes | / | / | / | / |
| **Weight gain** | / | 20 % | / | 13 % | / | / | / | / |
| **Impregnation 4** | / | 2 wt.% Pd(hfac)₂ | / | 2 wt.% Pd(hfac)₂ | / | / | / | / |
| **Calcination after impr. 4** | / | Yes | / | Yes | / | / | / | / |
| **Weight gain** | / | - | / | 2.5 % | / | / | / | / |

Visual inspection of the samples showed a colour change of the silica samples with each impregnation-calcination step. The colour changes where in accordance with the expected colour change for the used catalyst precursor, indicating a good impregnation. The colour change was also uniform, indicating a homogenous impregnation with the catalyst precursor and a uniform deposition of the catalyst. The weight gain also confirms that the catalyst precursor was deposited.

Samples 2 and 4 were also analysed by means of SEM-EDX to confirm the presence of cobalt (Co) and palladium (Pd). The results are shown in Table 3, and confirm the deposition of both metals.

**Table 3: EDX results of impregnated and calcined 3D porous 3D-printed substrates**

| Sample | Si | O | Co | Pd |
|---|---|---|---|---|
| 2 | 37.1 ± 0.01 | 55.3 ± 0.02 | 5.08 ± 0.01 | 1.19 ± 0.01 |
| 4 | 34.7 ± 0.04 | 56.9 ± 0.08 | 4.72 ± 0.02 | 1.14 ± 0.01 |

### Example 5

Porous 3D-printed alumina (Al₂O₃) structures were impregnated with iron (Fe) and/or palladium (Pd) according to methods of the invention (samples 1 to 4 in Table 4, impregnation by means of scCO₂). Two reference samples, samples 5 and 6 in Table 4, were prepared as well using the same porous 3D-printed alumina structure and prepared by wet impregnation.

Figure 9 shows the results for the conversion of benzylalcohol by the samples (X_{BA}) and the selectivity of the samples into benzaldehyde (S_{BZ}) was measured by testing the samples in a model reaction. The selected model reaction was benzyl alcohol oxidation performed in a continuous flow reactor under the following conditions: 1 mL.min⁻¹ of 0.2 mol.L⁻¹ benzyl alcohol in DMF solution saturated in K₂CO₃ in co-current flow of air of 85 mL.min⁻¹ passing through an equal mass of the catalytic material (12 g of catalyst impregnated 3D-printed alumine structures) at a temperature of 100 °C and 1.01325 bar.

In Fig. 9, the left bars of each sample correspond to the conversion of benzyl alcohol, X_{BA}, in %. The right bars of each sample correspond to the selectivity into targeted benzaldehyde, S_{BZ}, in %. The Pd-containing sample 3 showed a higher conversion of benzyl alcohol and selectivity into targeted benzaldehyde than its conventionally deposited counterpart (sample 6) under the same operating conditions. This demonstrates the impact of the scCO₂ for impregnation. Sample 2, comprising only Fe as catalyst material, deposited by the inventive method using scCO₂ showed a higher selectivity into benzaldehyde than its conventionally deposited counterpart (sample 5).

**Table 4: Catalyst precursor details for different 3D porous 3D-printed structures**

| **Sample** | **Catalyst precursor** |
|---|---|
| 1 | 5% Fe + 5% Pd |
| 2 | 15% Fe |
| 3 | 15% Fe + 1% Pd |
| 4 | 5% Pd |
| 5 - reference sample | 15% Fe |
| 6 - reference sample | 15% Fe + 1% Pd |

## Claims

1. Method (100) for producing a three-dimensional porous 3D-printed structure, the method comprising:
building (101) a three-dimensional porous green body in a layered fashion from a paste comprising a carrier material, a binder material and a solvent, and
drying (102) the three-dimensional porous green body, thereby obtaining the three-dimensional porous 3D-printed structure,
wherein the carrier material comprises an inorganic material,
**characterised in that** drying (102) the three-dimensional porous green body comprises passing a feed of a first supercritical fluid through the pores of the three-dimensional green body, thereby removing the solvent from the three-dimensional green body.

2. Method according to claim 1, wherein the solvent comprises one or more of water, methanol, ethanol or isopropanol.

3. Method according to claim 2, wherein drying (102) the porous green body comprises dissolving the solvent in the first supercritical fluid.

4. Method according to any one of the preceding claims, wherein the inorganic material comprises at least one of a ceramic material and a carbon-based material.

5. Method according to any one of the preceding claims, further comprising impregnation (104) of the three-dimensional porous structure with a second supercritical fluid comprising a catalytically active material and/or a catalyst precursor, thereby depositing the catalytically active material and/or the catalyst precursor on at least part of a surface of the three-dimensional porous structure.

6. Method according to claim 5, wherein the catalytically active material comprises a photo-catalytically active material and/or an electro-catalytically active material.

7. Method according to claim 5 or 6, wherein the catalyst precursor comprises a metal salt comprising one or more elements from Group VIIIb 8, Group Vlllb 10, and/or Group Ib, preferably cobalt, nickel, iron and/or palladium.

8. Method according to any one of the preceding claims, wherein the first supercritical fluid and/or optionally the second supercritical fluid is supercritical CO₂ (scCO₂).

9. Method according to claim 8, wherein drying (102) the porous green body is performed at a temperature between 20 °C and 75 °C, preferably between 30°C and 40 °C, and at a pressure between 0.1 MPa and 15 MPa, preferably between 9 MPa and 12 MPa.

10. Method according to claim 8 or claim 9 in combination with any one of claims 5 to 7, wherein the second supercritical fluid is scCO₂, and wherein the impregnation (104) is performed at a pressure between 0.1 MPa and 15 MPa, preferably between 1 MPa and 10 MPa, and at a temperature between 20 °C and 75 °C, preferably between 30 °C and 40 °C.

11. Method according to any one of the preceding claims, further comprising calcining (103, 105) the three-dimensional porous structure and/or the impregnated three-dimensional porous structure.

12. Method according to any one of claims 5 to 7, wherein the catalyst precursor is deposited on at least part of a surface of the three-dimensional porous structure and further comprising a reduction treatment (106) of the impregnated three-dimensional porous structure comprising contacting the impregnated three-dimensional porous structure with a flow comprising hydrogen, thereby converting the catalyst precursor into a catalytically active material.

13. Method according to claim 12 in combination with claim 11, wherein the impregnated three-dimensional porous structure is calcined (105), and wherein the calcination (105) and the reduction treatment (106) are performed in a single treatment step.

14. Method according to any one of the preceding claims, wherein the three-dimensional porous green body is built by a 3D-printing technique.

15. Three-dimensional porous structure comprising interconnected pores, wherein the three-dimensional porous structure comprises an inorganic material and further comprises a catalytically active material deposited on at least part of a surface of the pores, wherein the catalytically active material is present in the form of grains, **characterised in that** the grains have an average grain size of at most 1 µm, preferably at most 0.75 µm, more preferably at most 0.5 µm, as determined by EDX.

16. Three-dimensional porous structure according to claim 15, wherein the average grain size of the grains of the catalytically active material is between 0.01 µm and 1 µm, preferably between 0.05 µm and 1 µm, more preferably between 0.05 µm and 0.75 µm, as determined by EDX.
